# EUROPEAN PATENT SPECIFICATION

(11) **EP 3 538 305 B1**
(45) Date of publication and mention of the grant of the patent: **03.07.2024**
(21) Application number: 17816452.1
(22) Date of filing: 06.11.2017
(51) Int. Cl.: B23B 1/00

(54) **METHOD OF MACHINING TI, TI-ALLOYS AND NI-BASED ALLOYS**
VERFAHREN ZUR BEARBEITUNG VON TI, TI-LEGIERUNGEN UND NI-BASIERTEN LEGIERUNGEN
PROCÉDÉ D'USINAGE DE TI, D'ALLIAGES DE TI ET D'ALLIAGES À BASE DE NI

(30) Priority: 08.11.2016 EP 16197650
(43) Date of publication of application: 18.09.2019
(73) Proprietor: Sandvik Intellectual Property AB, 811 81 Sandviken (SE)
(72) Inventor: SADIK, Ibrahim, 164 45 Kista (SE); GARCIA, José, Luis, 113 33 Stockholm (SE)
(74) Representative: Sandvik
(86) International application number: PCT/EP2017/078321
(87) International publication number: WO 2018/087038

(56) References cited:
- WO-A1-2009/035396
- WO-A1-2016/174028
- WO-A1-2018/060046
- US-A1- 2010 272 529
- US-A1- 2011 048 183
- US-A1- 2012 144 753

## Description

The present invention relates to the use of a cemented carbide cutting tool comprising WC and a low amount of binder phase when machining Ti, Ti-alloys and Ni-based alloys under cryogenic conditions.

### Background

Cutting tools made of cemented carbide are well known in the art for machining Ti-alloys and Ni-alloys like Inconel. These materials are known to be difficult to machine. One of the problems that can occur when machining these types of work piece materials is chemical wear.

Chemical wear is common for machining Ti-alloys. Therefore, the solubility and reactivity with the work piece material is found to be very important when selecting an insert for machining Ti-alloys. The extremely low thermal conductivity of Ti causes heat transfer to the insert and enhanced chemical reactivity.

It is also well known in the art of machining that it is beneficial to use some type of cooling in order to keep the temperature down.

In many applications a coolant is used to achieve this. However, the conventional coolants are not always environmentally friendly and needs to be processed. Recycling of the coolant is difficult since it will contain chips from the work piece material. Larger chips can of course be removed but the smaller ones in the range of a few micrometers will remain. These small fragments can cause damage to the work piece material if the coolant is reused.

Also, the use of conventional coolants such as emulsions or MQL (minimum quantity lubrication) can, in some aerospace applications, limit the possibility to recycle the chips. For example, in some aerospace applications, recycled chips cannot be used when producing new alloys due to contamination with coolant emulsions or lubricants.

For some applications, the cooling effect that is achieved by the conventional coolants (emulsions) is not enough. Cryogenic machining is one alternative to achieve a more efficient cooling effect. Cryogenic cooling is also a good alternative to traditional coolants for environmental reasons since they are non-toxic.

One object of the present invention is to improve tool life when machining Ti, Ti-alloys and Ni-based alloys.

### Detailed description of the invention

The present invention relates to the use of a cutting tool according to claim 1.

The definition of cryogenic has somewhat varied over the years. The scientific definition is that the temperature should be below -153°C. However, in recent years the definition has somewhat broaden and in more recent publications e.g. CO₂ is also included which has a temperature of -80°C.

By cryogenic cooling is herein meant that the coolant ha a temperature below -50°C. Suitably the coolant is liquid nitrogen and/or CO₂.

In one embodiment of the present invention the coolant is liquid nitrogen.

In another embodiment of the present invention the coolant is liquid CO₂. The CO₂ can either be in the form of a liquid (supercritical), a gas or a mix of liquid/gas.

In one embodiment of the present invention, the cryogenic coolant is combined with MQL (minimum quantity lubrication).

In another embodiment of the present invention the cryogenic coolant is combined with compressed air. This is beneficial sometimes to help remove the chips from the cutting area.

In another embodiment of the present invention the cryogenic coolant is combined with both compressed air and MQL (minimum quantity lubrication).

The flow of the coolant depends on the exact application and setup but is suitably between 0.05 to 1 kg/min. The pressure of the coolant will also vary depending on the exact application and setup but is suitably between 3 to 100 Bar.

The coolant can be applied in different ways depending on the type of machining operation and tool type etc.

In one embodiment of the present invention, the coolant is provided by external cooling. By that is meant that the coolant is provided by one or more separate nozzles directed towards the area where the machining takes place, i.e. where the tool and the workpiece material meet.

In one embodiment of the present invention, the coolant is provided by internal cooling through the tool holder. By that is meant that the coolant is provided by channels in the tool holder that will apply the coolant directly onto the cutting tool.

In one embodiment of the present invention, the coolant is provided by internal cooling through the tool holder and the cutting tool, i.e. a closed loop. By that is meant that the coolant is provided through channels which will lead the coolant through the tool holder and through the cutting tool and then back again through the tool holder in a closed loop. The coolant can thus be reused.

In one embodiment of the present invention, the coolant is provided by internal cooling through the tool holder and the cutting tool and where the coolant is leaving the cutting tool, i.e. there is no closed loop. This embodiment is common for e.g. drills.

In one embodiment of the present invention, the coolant can be provided by a combination of at least two types of cooling methods as disclosed above, i.e. selected from external cooling, internal cooling through the tool holder and internal cooling through the tool holder and through the cutting tool with or without closed loop.

In one embodiment of the present invention, the method of machining is suitably a turning operation. Suitably the machining parameters are V_{c} between 30 and 200 m/min, preferably between 30 and 120 m/min, more preferably between 100 to 120 m/min, aₚ between 0.1 and 5 mm, preferably between 0.3 and 2 mm. The feed rate, f_{z}, is suitably between 0.05 and 0.4 mm/rev, preferably between 0.05 and 0.3 mm/rev.

The cutting tool comprising a substrate of cemented carbide according to the present invention is suitable for machining non-ferrous alloys, most suitable for Ti or Ti-alloys and/or Ni-based alloys and most suitable for Ti or Ti-alloys. Examples of Ti and Ti alloys are suitably α, β and γ alloys, e.g. α-Ti and α-alloys such as Ti₅Al_{2.5}Sn, near α-alloys such as Ti₆Al₂Sn₄Zr₂Mo, .α+β alloys such as Ti₆Al₂Sn₄Zr₆Mo and Ti₆Al₄V. Examples of Ni-based alloys are Inconel 718, Waspaloy and Haynes 282 alloy.

The WC in the cemented carbide according to the present invention has an average grain size of between 1.2 to 8 µm , preferably between 2 to 5 µm more preferably between 3 to 4 µm. The WC grain size is preferably measured by using line intercept method on Scanning Electron Microscope Images. In production etc. an estimation of the grain size can be made from Coercivity measurements.

In addition to WC and a binder phase, the cemented carbide can also comprise other constituents common in the art of making cemented carbides e.g. Nb, Ta, Ti and Cr. The amount of these elements may vary between 20 ppm by weight and 5 wt% of the total cemented carbide.

In one embodiment of the present invention, the amount of additional constituents, i.e. in addition to WC, is between 20 ppm by weight and 1 wt%, preferably between 20 and 250 ppm by weight of the total cemented carbide.

In another embodiment of the present invention, WC is the only hard constituent present.

The cemented carbide can also comprise small amounts of other elements common in the art, such as rare earths, oxides, aluminides and borides.

The binder phase content in the cutting tool comprising a substrate of cemented carbide is between 2 to 4 wt%.

The binder phase can comprise one or more of Co, Ni and Fe.

In one embodiment of the present invention, the binder phase mainly comprises Co. By that is herein meant that, as raw material for the binder phase, only Co is added. However, during manufacturing other elements might dissolve partly in the Co.

The cemented carbide is free from eta phase and free graphite. Preferably, the cemented carbide has a slightly overstoichiometric carbon content.

In one embodiment of the present invention, the cemented carbide consists of WC and Co and unavoidable impurities.

It is common in the art to provide cemented carbide tools with a coating in order to increase the tool life. The cemented carbide according to the present invention can either be uncoated or be provided with a coating, suitably a CVD or PVD coating known in the art.

In one embodiment of the present invention, a cutting tool according to the present invention is suitably uncoated.

In one embodiment of the present invention, the cemented carbide body is provided with a coating useful for wear detection, e.g. TiN with a thickness of 0.2-3 µm.

In another embodiment of the present invention, the cemented carbide body is provided with a coating comprising carbon, e.g. a DLC coating with a thickness of 0.2-3 µm, deposited by e.g. CVD.

In another embodiment of the present invention, the cemented carbide body is provided with a coating comprising diamond with a thickness of between 0.5 to 15 µm.

In another embodiment of the present invention, the cemented carbide body is provided with a coating comprising a ZrC monolayer with a thickness of 0.2-3 µm by CVD deposition.

By cutting tool is herein meant an insert, drill or an end mill.

In one embodiment of the present invention, the cutting tool is a turning insert.

### Example 1 (Invention)

A mixture made of WC with an average grain size and 3 wt% Co was mixed and blended for 18 h, pressed and sintered at 1410°C for 1 h under vacuum conditions. After sintering the cemented carbide consists of WC embedded in Co metal binder phase. The sintered piece was then subjected to a second sintering step at 1410°C for 1. h.

The resulting cemented carbide had a WC grain size of 3.4 µm as calculated from the Coercivity, 16.5 kA/m, which has been measured using a Foerster Koerzimat CS1.096 according to DIN ISO 3326.

This cemented carbide body is called Sample 1.

### Example 2 (Reference)

A mixture made of WC, 6 wt% Co with additional extra carbon was mixed and blended for 18h, pressed and sintered at 1410°C for 1 h under vacuum conditions. After sintering the cemented carbide comprised WC embedded in a Co metal binder phase. The Coercivity was 18 kA/m, measured using a Foerster Koerzimat CS1.096 according to DIN ISO 3326.

The WC average grain size was 0.76 µm measured using the line intercept method.

This cemented carbide body is called Sample 2.

### Example 3 (Working example)

The inserts described in example 1 and 2 were tested in a turning operation in a Ti₆Al₄V alloy using the following conditions:

| | |
|---|---|
| ap= | 2 mm |
| F_{z}= | 0.1-0.2 mm/rev, Variable |
| Vc= | 70 m/min |
| Cooling: | Liquid nitrogen, 7 bar, 0.85 kg/min, internal through the holder |

The tool life criterion was flank wear (VB= 0.3 mm), notch (VBₙ= 0.4 mm) or edge destruction. The results can be seen in Table 1 where each result is an average of two tests, i.e. of two inserts.

**Table 1**

| Cutting tool | Feed rate (mm/rev) | Tool life (minutes) |
|---|---|---|
| Sample 1 (Invention) | 0.1 | 47 |
| Sample 2 (Comparative) | 0.1 | 20 |
| Sample 1 (Invention) | 0.15 | 22 |
| Sample 2 (Comparative) | 0.15 | 6 |
| Sample 1 (Invention) | 0.2 | 16 |
| Sample 2 (Comparative) | 0.2 | 3 |

### Example 4 (Working example)

The inserts described in example 1 and 2 were tested in a turning operation in a Ti₆Al₄V alloy using the following conditions:

| | |
|---|---|
| ap= | 2 mm |
| F_{z}= | 0.1-0.2 mm/rev, Variable |
| Vc= | 115 m/min |
| Cooling: | Liquid nitrogen, 7 bar, 0.85 kg/min, internal through the holder |

The tool life criterion was flank wear (VB= 0.3 mm), notch (VBₙ= 0.4 mm) or edge destruction. The results can be seen in Table 2 where each result is an average of two tests, i.e. of two inserts.

**Table 2**

| Cutting tool | Feed rate (mm/rev) | Tool life (minutes) |
|---|---|---|
| Sample 1 (Invention) | 0.1 | 4.5 |
| Sample 2 (Comparative) | 0.1 | 1 |
| Sample 1 (Invention) | 0.15 | 4 |
| Sample 2 (Comparative) | 0.15 | 0.5 |
| Sample 1 (Invention) | 0.2 | 2 |
| Sample 2 (Comparative) | 0.2 | 0.3 |

## Claims

1. Use of a cutting tool comprising a cemented carbide substrate comprising WC and a binder phase for machining in Ti, Ti-alloys or Ni-based alloys wherein a cryogenic coolant is used, **characterised in that**
the binder phase content is of between 2 and 4 wt%;
the average WC grain size is of between 1.2 and 8 µm; and
the cemented carbide is free from eta phase and free graphite.

2. Use of a cutting tool according to claim 1 **characterised in that** the coolant is liquid nitrogen.

3. Use of a cutting tool according to claim 1 **characterised in that** the coolant is liquid CO₂.

4. Use of a cutting tool according to any of the preceding claims **characterised in that** the turning operation is operated at a V_{c} of between 30 to 200 m/min, at a ap between 0.1 to 5 mm and at a feed rate of between 0.05 to 0.4 mm/rev.

5. Use of a cutting tool according to any of the preceding claims **characterised in that** the coolant is provided through external cooling.

6. Use of a cutting tool according to any of the preceding claims **characterised in that** the coolant is provided through internal cooling through the tool holder.

7. Use of a cutting tool according to any of the preceding claims **characterised in that** the coolant is provided through internal cooling through the tool holder and the cutting tool.

8. Use of a cutting tool according to any of the preceding claims **characterised in that** the average grain size of the WC in the cemented carbide is between 2 and 5 µm.

9. Use of a cutting tool according to any of the preceding claims **characterised in that** the cutting tool is uncoated.

10. Use of a cutting tool according to any of claims 1-8 **characterised in that** the cutting tool is provided with a coating.

## Patentansprüche

1. Verwendung eines Schneidwerkzeuges mit einem Hartmetallsubstrat, dass WC und eine Binderphase enthält, zum Bearbeiten von Ti, Ti-Legierungen oder Legierungen auf Ni-Basis, wobei ein kryogenes Kühlmittel verwendet wird, **dadurch gekennzeichnet, dass**
der Binderphasengehalt zwischen 2 und 4 Gew.-% beträgt,
die durchschnittliche WC-Korngröße zwischen 1, 2 und 8 µm beträgt und
das Hartmetall frei von Eta-Phase und frei von Graphit ist.

2. Verwendung eines Schneidwerkzeuges nach Anspruch 1, **dadurch gekennzeichnet, dass** das Kühlmittel flüssiger Stickstoff ist.

3. Verwendung eines Schneidwerkzeuges nach Anspruch 1, **dadurch gekennzeichnet, dass** das Kühlmittel flüssiges Kohlendioxid ist.

4. Verwendung eines Schneidwerkzeuges nach einem der vorangehenden Ansprüche, **dadurch gekennzeichnet, dass** der Drehbetrieb bei einem V_{c} von zwischen 30 bis 200 m/min betrieben wird und bei einem aₚ zwischen 0,1 bis 5 mm und bei einer Vorschubrate von zwischen 0,05 bis 0,4 mm/Umdrehung.

5. Verwendung eines Schneidwerkzeuges nach einem der vorangehenden Ansprüche, **dadurch gekennzeichnet, dass** das Kühlmittel über eine externe Kühlung bereitgestellt wird.

6. Verwendung eines Schneidwerkzeuges nach einem der vorangehenden Ansprüche, **dadurch gekennzeichnet, dass** das Kühlmittel über eine interne Kühlung durch den Werkzeughalter bereitgestellt wird.

7. Verwendung eines Schneidwerkzeuges nach einem der vorangehenden Ansprüche, **dadurch gekennzeichnet, dass** das Kühlmittel über eine interne Kühlung durch den Werkzeughalter und das Schneidwerkzeug bereitgestellt wird.

8. Verwendung eines Schneidwerkzeuges nach einem der vorangehenden Ansprüche, **dadurch gekennzeichnet, dass** die durchschnittliche Korngröße des WC in dem Hartmetall zwischen 2 und 5 µm beträgt.

9. Verwendung eines Schneidwerkzeuges nach einem der vorangehenden Ansprüche, **dadurch gekennzeichnet, dass** das Schneidwerkzeug nicht beschichtet ist.

10. Verwendung eines Schneidwerkzeuges nach einem der Ansprüche 1 bis 8, **dadurch gekennzeichnet, dass** das Schneidwerkzeug mit einer Beschichtung versehen ist.

## Revendications

1. Utilisation d'un outil de coupe comprenant un substrat en carbure cémenté comprenant du WC et une phase de liant pour l'usinage de Ti, d'alliages de Ti ou d'alliages à base de Ni, dans laquelle un réfrigérant cryogénique est utilisé, **caractérisée en ce que** :
la teneur en phase de liant est entre 2 et 4 % en poids ;
la taille de grain moyenne du WC est entre 1,2 et 8 µm ; et
le carbure cémenté est exempt de phase eta et de graphite libre.

2. Utilisation d'un outil de coupe selon la revendication 1, **caractérisée en ce que** le réfrigérant est de l'azote liquide.

3. Utilisation d'un outil de coupe selon la revendication 1, **caractérisée en ce que** le réfrigérant est du CO₂ liquide.

4. Utilisation d'un outil de coupe selon l'une quelconque des revendications précédentes, **caractérisée en ce que** l'opération de tournage est effectuée à une vitesse V_{c} entre 30 et 200 m/minute, à un aₚ entre 0,1 et 5 mm et à une vitesse d'alimentation entre 0,05 et 0,4 mm/rotation.

5. Utilisation d'un outil de coupe selon l'une quelconque des revendications précédentes, **caractérisée en ce que** le réfrigérant est fourni par l'intermédiaire d'un refroidissement externe.

6. Utilisation d'un outil de coupe selon l'une quelconque des revendications précédentes, **caractérisée en ce que** le réfrigérant est fourni par l'intermédiaire d'un refroidissement interne par l'intermédiaire du support d'outil.

7. Utilisation d'un outil de coupe selon l'une quelconque des revendications précédentes, **caractérisée en ce que** le réfrigérant est fourni par l'intermédiaire d'un refroidissement interne par l'intermédiaire du support d'outil et de l'outil de coupe.

8. Utilisation d'un outil de coupe selon l'une quelconque des revendications précédentes, **caractérisée en ce que** la taille de grain moyenne du WC dans le carbure cémenté est entre 2 et 5 pm.

9. Utilisation d'un outil de coupe selon l'une quelconque des revendications précédentes, **caractérisée en ce que** l'outil de coupe est non revêtu.

10. Utilisation d'un outil de coupe selon l'une quelconque des revendications 1 à 8, **caractérisée en ce que** l'outil de coupe est muni d'un revêtement.
